# EUROPÄISCHE PATENTSCHRIFT

(11) **EP 1 323 543 B1**
(45) Veröffentlichungstag und Bekanntmachung des Hinweises auf die Patenterteilung: **13.09.2006**
(21) Anmeldenummer: 02027691.1
(22) Anmeldetag: 13.12.2002
(51) Int. Cl.: B42D 15/00, B44C 1/17

(54) **Verfahren zur Applikation von dünnschichtigen Sicherheitselementen auf wärmeempfindliche Substrate und damit hergestellte Zwischenprodukte**
Method for applying thin security elements on heat-sensitive substrates and intermediate products obtained thereby
Procédé pour appliquer des éléments de sécurité minces sur des substrats sensibles à la chaleur et produits intermédiaires ainsi obtenus

(30) Priorität: 17.12.2001 DE 10162051
(43) Veröffentlichungstag der Anmeldung: 02.07.2003
(73) Patentinhaber: Giesecke & Devrient GmbH, 81677 München (DE)
(72) Erfinder: Hofer, Werner, 85604 Zorneding (DE); Stark, Peter, 83666 Waakirchen (DE)
(74) Vertreter: Klunker . Schmitt-Nilson . Hirsch

(56) Entgegenhaltungen:
- EP-A- 0 552 956
- EP-A- 1 002 640
- EP-A- 1 075 940
- US-A- 5 490 899
- US-A1- 2001 026 720

## Beschreibung

Die Erfindung betrifft ein Verfahren zur Applikation von dünnschichtigen Sicherheitselementen auf wärmeempfindliche Substrate im Heißprägeverfahren sowie ein damit hergestelltes Zwischenprodukt als Rollenware und dessen Einstz bei der so genannten "Endloslaminierung".

In Wertdokumente aus Papier oder Kunststoff, insbesondere Scheckkarten, Kreditkarten, Ausweiskarten sowie Banknoten, Schecks, Ausweise, Fahrkarten, Eintrittskarten und dergleichen, werden unterschiedlichste, dünnschichtige Sicherheitselemente integriert, wie z.B. Magnetstreifen, optisch variable Elemente, Sicherheitsfäden oder -bänder und dergleichen. Optisch variable Elemente können beispielsweise Hologramme, latente Bilder, Perlglanzpigmentschichten, Schichten oder Pigmentschichten mit vemetzten Flüssigkristallen, optische Interferenzschichten oder Beugungsgitter sein.

Solche Sicherheitselemente werden häufig auf einer separaten Trägerschicht als Rollenware zur Verfügung gestellt und anschließend mit oder ohne die Trägerschicht im Transferverfahren auf das jeweilige Substratmaterial unter Anwendung von Druck und Temperatur, d.h. im Heißprägeverfahren, übertragen. Das mit dem Sicherheitselement ausgestattete Substratmaterial wird dann wieder aufgerollt und als Zwischenprodukt in Rollenform gelagert, bevor es später für die Weiterverarbeitung in Formatware geschnitten wird, beispielsweise in Mehrnutzenbögen oder Einzelnutzen.

Die EP 1002 640 A1 beschreibt einen Stand der Technik, bei dem ein Metallfaden im Heißprägeverfahren von einer PET-Trägerfolie gelöst und auf eine Papier- oder Kunststofffolie zur Herstellung von Banknoten transferiert wird. Als nachteilhaft an diesem Stand der Technik wird erwähnt, dass das Substratmaterial bisweilen für Heißprägezwecke zu wärmeempfindlich sei. Ein anderes bekanntes Verfahren, den Metallfaden gemeinsam mit der PET-Trägerfolie in einem letzten Schritt auf das Substrat zu übertragen, führe dagegen zu Wickel- und Stapelproblemen wegen der zusätzlichen, durch die PET-Trägerfolie bedingte Materialdicke. In der EP 1 002 640 A1 wird daher vorgeschlagen, die Oberfläche des Metallfadens, die mit dem Substratmaterial in Berührung kommt, mit einer druckempfindlichen Kleberschicht auszurüsten und die PET-Trägerfolie beim Transferverfahren zu entfernen. Bei dieser Lösung wird also einerseits die PET-Trägerfolie nicht mit auf das Substrat übertragen und andererseits kommt das Transferverfahren ohne die Einbringung von Wärmeenergie aus, sondern benötigt lediglich Druckanwendung zur Aktivierung des Klebers.

Bei manchen Anwendungsfällen lässt sich jedoch der Einsatz von Wärmeenergie zur Übertragung und festen Verbindung des dünnschichtigen Sicherheitselements auf das Substrat nicht vermeiden. Beispielsweise die Übertragung eines Magnetstreifens auf eine Kunststofffolie erfolgt unter Umständen ohne den Einsatz jeglichen Klebers, indem der Magnetstreifen im Transferverfahren unter Anwendung von Druck und Temperatur von einer Trägerfolie auf die Kunststofffolie transferiert und darin derart eingepresst wird, dass sie bündig mit der Kunststofffolienoberfläche abschließt. Auch andere Transferverfahren, insbesondere auf Heißschmelzkleber basierende Transferverfahren, können den Einsatz von Druck und Temperatur zwingend erfordern.

Wenn in solchen Fällen das Substratmaterial wärmeempfindlich ist, kann es zu Problemen kommen. Beispielsweise dienen die vorgenannten, mit Magnetstreifen ausgestatteten Kunststofffolien regelmäßig als Deckfolien für mehrschichtige Ausweiskarten, Scheckkarten und dergleichen. Solche Kunststofffolien sind daher rückseitig mit einer Heißschmelzkleberschicht ausgestattet, um einen festen Verbund mit den übrigen Schichten der Karten zu gewährleisten, wenn die einzelnen Kartenschichten im Laminierverfahren unter Anwendung von Druck und Temperatur zum fertigen Kartenverbund vereinigt werden. Diese Heißschmelzkleberschicht auf der Rückseite der Kunststofffolie führt insoweit zu Problemen, als sie bei der Applikation des Magnetstreifens oder eines anderen Sicherheitselements im Thermotransferoder Heißprägeverfahren zumindest teilweise aktiviert werden kann, was beim nachfolgenden Aufwickeln der Folie dazu führen kann, dass die rückseitige Heißschmelzkleberschicht mit dem frontseitig applizierten Sicherheitselement der angrenzenden Folienwickellage verklebt. Ein solches Verkleben aneinander grenzender Lagen wird auch als so genannte "Verblokkung" bezeichnet und kann beim späteren Abwickeln zur Beschädigung der empfindlichen Sicherheitselemente führen.

Aufgabe der vorliegenden Erfindung ist es daher, ein Verfahren zur Applikation von dünnschichtigen Sicherheitselementen auf wäremeempfindliche Substrate im Heißprägeverfahren zur Verfügung zu stellen, welches ein anschließendes Aufrollen des Substrats zu einem Zwischenprodukt ohne die Gefahr des Verklebens aneinander grenzender Wickellagen sicherstellt.

Diese Aufgabe wird erfindungsgemäß durch ein Verfahren und ein Zwischenprodukt mit den Merkmalen der nebengeordneten Patentansprüche gelöst. In davon abhängigen Ansprüchen sind vorteilhafte Weiterbildungen und Ausgestaltungen der Erfindung angegeben.

Dementsprechend wird ähnlich dem eingangs genannten, in der EP 1 002 640 A1 diskutierten Stand der Technik die Trägerfolie nach dem Heißprägetransfervorgang zusammen mit dem Substratmaterial aufgerollt.

Die Trägerfolie stellt dann eine Trennfolie dar, die im aufgewickelten Zustand die eine Oberfläche des wärmeempfindlichen Substratmaterials von der gegenüberliegenden Oberfläche einer angrenzenden Wickellage trennt, so dass ein Verkleben der einen Substratmaterialoberfläche mit den auf der gegenüberliegenden Substratmaterialoberfläche applizierten Sicherheitselementen einer angrenzenden Wickellage ausgeschlossen ist. Im Gegensatz zu dem in der EP 1 002 640 A1 diskutierten Stand der Technik bildet die Trägerfolie aber keinen festen Bestandteil des Substratmaterials, d.h. sie wird nicht insgesamt mit den Sicherheitselementen "transferiert", sondern sie bleibt von den transferierten Sicherheitselementen lösbar. Das Trennen der Trägerfolie von den transferierten Sicherheitselementen erfolgt jedoch erst vor der Weiterverarbeitung des Substratmaterials, d.h. nach dem erneuten Abwickeln beispielsweise vor dem Zerschneiden des Substratmaterials in Mehrnutzenbögen oder Einzelnutzen oder vor der kontinuierlichen Weiterverarbeitung direkt von der Rolle.

Durch die als Trennschicht wirkende Trägerfolie wird also ein Verkleben des aufgerollten und mit einem Sicherheitselement versehenen Substratmaterials unterbunden. Vielmehr hat das wärmeempfindliche Substratmaterial ausreichend Zeit, sich von dem Heißprägetransferprozess zu erholen und wieder einen unkritischen Zustand anzunehmen. Insbesondere kühlt eine rückseitige Heißkleberschicht des Substratmaterials wieder so weit ab, dass sie nicht mehr klebrig ist. Selbstverständlich muss die Trägerfolie aus einem solchen Material sein, dass sie selbst nicht mit dem Substratmaterial bzw. dessen Heißkleberschicht verkleben kann. Das ist aber für Trägerfolien, deren Transferelemente im Heißprägeverfahren übertragen werden, ohnehin der Fall. Für die Trägerfolie kommen insbesondere Materialien in Frage, die neben einer hohen Temperaturbeständigkeit auch eine hohe Zugfestigkeit und eine geringe biaxiale Dehnung aufweisen. Ein geeignetes Material ist beispielsweise PET (Polyethylen-Terephthalat). Als Substratmaterial werden bevorzugt für die Herstellung von Wertdokumenten einschlägig bekannte Kunststoffe in Folienform eingesetzt.

Zwar trifft auch auf die erfindungsgemäße Lösung der im Stand der Technik erwähnte Nachteil zu, dass das Mitaufwickeln der Trägerfolie zu einer vergleichsweise dicken Zwischenproduktrolle führt. Dieser Nachteil wird aber in Kauf genommen, zumal er - anders als beim Stand der Technik - auf die gestapelten Endprodukte nicht mehr zutrifft, da die Trägerfolie zuvor entfernt wird.

Nachfolgend wird die Erfindung beispielhaft anhand der begleitenden Zeichnungen erläutert. Darin zeigen:
- Fig. 1: einen erfindungsgemäßen Transferprozess und
- Fig. 2: die Weiterverarbeitung einer erfindungsgemäßen Zwischenproduktrolle.

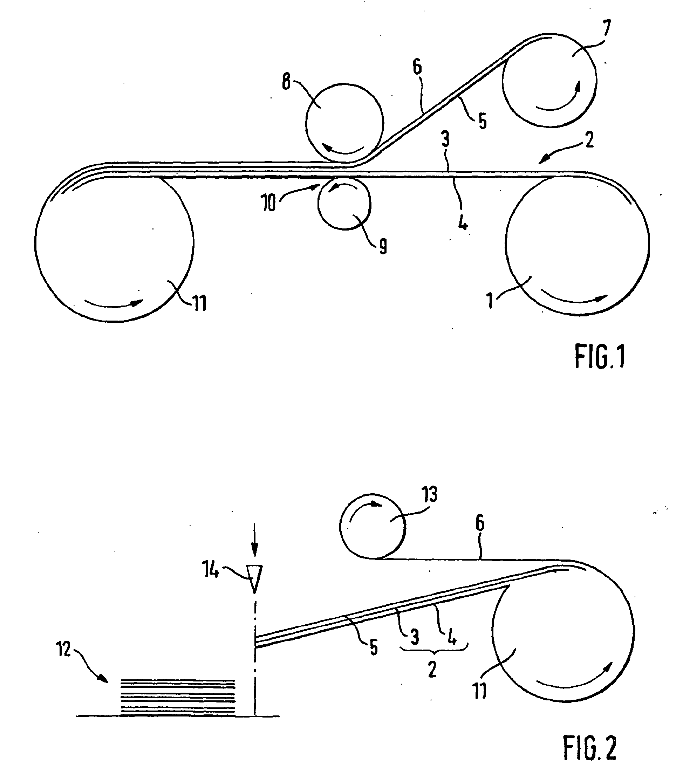

Fig. 1 zeigt einen Heißprägetransferprozess, bei dem von einer Substratmaterialrolle 1 ein Substratmaterial 2 abgewickelt wird, welches in diesem Falle aus einer Kunststofffolie 3 mit einer Heißschmelzkleberbeschichtung 4 besteht. Das Substratmaterial 2, beispielsweise aus PVC (Polyvinylchlorid) wird mit Sicherheitselementen in Form eines durchgehenden Magnetstreifens 5 zusammengeführt, der auf einem bandartigen Trägermaterial in Form einer Kunststoffträgerfolie 6 vorliegt, welche von einer Vorratsrolle 7 abgespult wird. In einem durch einen Prägezylinder 8 und eine Gegendruckwalze 9 gebildeten Spalt 10 erfolgt die Übertragung und innige Verbindung des Magnetstreifens 5 auf eine Oberfläche der Kunststofffolie 3 im Heißprägeverfahren, d.h. unter Anwendung von Druck und Temperatur. Die Temperatur wird im Wesentlichen durch den Prägezylinder 8 eingebracht, welcher auf etwa 150° C beheizt ist. Die Gegendruckwalze 9 erzeugt einen Gegendruck von etwa 2,7 bar.

Bei diesem Transfervorgang kann eine teilweise Erwärmung der rückseitig auf die Kunststoffträgerfolie 6 aufgebrachten Heißschmelzkleberbeschichtung 4 des Substratmaterials 2 nicht vollständig vermieden werden. Daher wird die Trägerfolie 6 nicht, wie allgemein üblich, nach dem Transfervorgang auf eine Abfallrolle aufgewickelt, sondern zusammen mit dem Substratmaterial 2 und dem darauf applizierten Magnetstreifen 5 auf eine Zwischenproduktrolle 11 aufgerollt. Die Trägerfolie 6 fungiert daher in der Zwischenproduktrolle 11 als Trennschicht zwischen dem Magnetstreifen 5 und der teilweise aktivierten, d.h. klebrigen Heißschmelzkleberbeschichtung 4 einer angrenzenden Substratmaterialwickellage und verhindert so ein Verkleben der Heißschmelzkleberbeschichtung 4 mit dem angrenzenden Magnetstreifen 5.

Fig. 2 zeigt die Weiterverarbeitung der Zwischenproduktrolle 11 in separat handhabbare Substrate in Form von Mehrnutzenbögen oder Einzelnutzen 12. Dazu wird das durch die Kunststofffolie 3 mit der Heißschmelzkleberbeschichtung 4 gebildete Substratmaterial 2 einschließlich des darauf applizierten Magnetstreifens 5 und der Trägerfolie 6 von der Zwischenproduktrolle 11 abgewickelt. Dabei wird die Trägerfolie 6 abgezogen und auf einer Abfallspule 13 aufgewickelt. Der verbleibende Schichtverbund besteht aus der Kunststofffolie 3, die auf einer Seite mit der Heißschmelzkleberbeschichtung 4 und auf der anderen Seite mit dem Magnetstreifen 5 ausgestattet ist. Er wird einer Schneid- oder Stanzvorrichtung 14 zugeführt, mit der die Mehrnutzenbögen oder Einzelnutzen 12 aus dem abgerollten Endlosmaterial zugeschnitten oder ausgestanzt werden, die dann mit weiteren Schichten unter Anwendung von Druck und Wärme zu einem fertigen Kartenverbund laminiert werden.

Die Weiterverarbeitung des nach dem Abziehen der Trägerfolie 6 verbleibenden Schichtverbunds zum fertigen Kartenverbund kann auch vor dem Schritt des Zuschneidens in Mehrnutzenbögen oder Einzelnutzen erfolgen.

Ein vorteilhafter Einsatz der erfindungsgemäßen Zwischenproduktrolle ist beispielsweise bei der Endloslaminierung gegeben. Dabei werden zu verbindende Folienbahnen von Rollen abgewickelt und in einem kontinuierlichen Verfahren zusammengeführt und vorzugsweise unter Anwendung von Druck und Wärme dauerhaft miteinander verbunden. Das mit einem dünnschichtigen Sicherheitselement versehene Substratmaterial wird von der Zwischenproduktrolle abgewickelt. Aufgrund des als Trennschicht wirkenden Trägermaterials lösen sich die einzelnen Lagen im Bereich des Sicherheitselements voneinander leicht und ohne dass Haftkräfte auf die empfindlichen Sicherheitselemente wirken. Das Abziehen des Trägermaterials vom Substratmaterial bzw. von den Sicherheitselementen kann zwischen der Rollenabwicklung und der Laminierstation erfolgen.

Für alle erfindungsgemäßen Ausführungsformen können die Sicherheitselemente auf dem Trägermaterial und damit auch auf dem letztlich hergestellten Produkt nicht nur bandförmig entlang einer fortlaufenden Spur, sondern auch als voneinander beabstandete Einzelelemente vorliegen.

Die erfindungsgemäß übertragenen Sicherheitselemente haben eine Dicke im Bereich von ca. 1 bis 100 µm, vorzugsweise 2 bis 25 µm.

## Patentansprüche

1. Verfahren zur Applikation von dünnschichtigen Sicherheitselementen (5) auf wärmeempfindliche Substrate (12) umfassend die folgenden Schritte:
- Zuführen der dünnschichtigen Sicherheitselemente (5) auf einem bandförmigen Trägermaterial (6),
- Zuführen eines wärmeempfindlichen Substratmaterials (2),
- Zusammenführen des Trägermaterials (6) und des Substratmaterials (2) unter Anwendung von Druck und Wärme derart, dass einerseits die dünnschichtigen Sicherheitselemente (5) an einer Oberfläche des Substratmaterials (2) haften und andererseits das Trägermaterial (6) von den dünnschichtigen Sicherheitselmenten (5) lösbar ist, und
- Aufwickeln des Substratmaterials (2) zusammen mit dem Trägermaterial (6) zu einer Zwischenproduktrolle (11).

2. Verfahren nach Anspruch 1, umfassend die weiteren Schritte:
- Abwickeln des Substratmaterials (2) mit dem Trägermaterial (6) von der Zwischenproduktrolle (11),
- Trennen des Trägermaterials (6) von dem Substratmaterial (2) derart, dass die dünnschichtigen Sicherheitselemente (5) auf dem Substratmaterial (2) verbleiben, und
- Zuschneiden des Substratmaterials in separat handhabbare Substrate (12).

3. Verfahren nach Anspruch 1 oder 2, wobei das Substratmaterial (2) auf seiner den dünnschichtigen Sicherheitselementen (5) abgewandten Seite eine Heißschmelzkleberschicht (4) besitzt.

4. Verfahren nach Anspruch 3, wobei das Substratmaterial (2) vor oder nach dem Schritt des Zuschneidens unter Anwendung von Druck und Wärme mit weiteren Schichten laminiert wird.

5. Verfahren nach einem der Ansprüche 1 bis 4 zur Herstellung von Wertdokumenten, ausgewählt aus der folgenden Gruppe von Wertdokumenten: Scheckkarten, Kreditkarten, Ausweiskarten, Banknoten, Schecks, Ausweise, Fahrkarten, Eintrittskarten.

6. Verfahren nach einem der Ansprüche 1 bis 5, wobei die dünnschichtigen Sicherheitselemente (5) ausgewählt werden aus der Gruppe von Sicherheitselementen: Magnetstreifen, Sicherheitsfäden, optisch variable Schichten, Hologramme, Beugungsgitter, latente Bilder, Perlglanzpigmentschichten, Schichten mit vernetzten Flüssigkristallen, optische Interferenzschichten.

7. Zwischenprodukt als Rollenware (11) zur Herstellung von Wertdokumenten wie Scheckkarten, Kreditkarten, Ausweiskarten, Banknoten, Schecks, Ausweise, Fahrkarten und Eintrittskarten, umfassend ein bandförmiges Trägermaterial (6) mit dünnschichtigen Sicherheitselementen (5) und ein wärmeempfindliches Substratmaterial (2), auf dessen einer Oberfläche die dünnschichtigen Sicherheitselemente (5) haften, **dadurch gekennzeichnet, dass** das bandförmige Trägermaterial (6) von den dünnschichtigen Sicherheitselementen (5) lösbar ist.

8. Zwischenprodukt nach Anspruch 7, wobei das Substratmaterial (2) auf seiner den dünnschichtigen Sicherheitselementen (5) abgewandten Seite eine Heißschmelzkleberschicht (4) besitzt.

9. Zwischenprodukt nach Anspruch 7 oder 8, wobei die dünnschichtigen Sicherheitselemente (5) ausgewählt sind aus der folgenden Gruppe von Sicherheitselementen: Magnetstreifen, Sicherheitsfäden, optisch variable Schichten, Hologramme, Beugungsgitter, latente Bilder, Perlglanzpigmentschichten, Flüssigkristallschichten, optische Interferenzschichten.

10. Verfahren zur Endloslaminierung von Folienbahnen für die Herstellung von Wertdokumenten, bei dem mindestens zwei Folienbahnen zusammengeführt und kontinuierlich miteinander verbunden werden, wobei mindestens eine der Folienbahnen ein wärmeempfindliches Substrat und ein darauf angeordnetes dünnschichtiges Sicherheitselement aufweist und als Zwischenprodukt gemäß einem der Ansprüche 7 bis 9 von einer Rolle abgewickelt wird, und ein zunächst auf den Sicherheitselementen angeordnetes bandförmiges Trägermaterial nach dem Abwickeln des Zwischenproduktes und vor dem Verbinden der Folienbahnen von dem wärmeempfindlichen Substrat und den dünnschichtigen Sicherheitselementen entfernt wird.

## Claims

1. A method for applying thin-layer security elements (5) onto heat-sensitive substrates (12) comprising the following steps:
- supplying the thin-layer security elements (5) on a web-shaped carrier material (6),
- supplying a heat-sensitive substrate material (2),
- bringing together the carrier material (6) and the substrate material (2) under the application of pressure and heat in such a way that the thin-layer security elements (5) adhere to one surface of the substrate material (2) and the carrier material (6) is separable from the thin-layer security elements (5), and
- winding the substrate material (2) together with the carrier material (6) to form an intermediate product roll (11).

2. The method according to claim 1, comprising the further steps:
- unwinding the substrate material (2) with the carrier material (6) from the intermediate product roll (11),
- separating the carrier material (6) from the substrate material (2) in such a way that the thin-layer security elements (5) remain on the substrate material (2), and
- cutting the substrate material into separately handable substrates (12).

3. The method according to claim 1 or 2, wherein the substrate material (2) has a hot-melt adhesive layer (4) on the side facing away from the thin-layer security elements (5).

4. The method according to claim 3, wherein the substrate material (2) is laminated with further layers under the application of pressure and heat before or after the step of cutting.

5. The method according to any of claims 1 to 4 for producing documents of value selected from the group of documents of value as follows: check cards, credit cards, ID cards, bank notes, checks, ID documents, tickets, admission tickets.

6. The method according to any of claims 1 to 5, wherein the thin-layer security elements (5) are selected from the group of security elements: magnetic stripes, security threads, optically variable layers, holograms, diffraction gratings, latent pictures, pearlescent pigment layers, layers with cross-linked liquid crystals, optical interference layers.

7. An intermediate product in the form of rolls (11) for producing documents of value such as check cards, credit cards, ID cards, bank notes, checks, ID documents, tickets and admission tickets, comprising a web-shaped carrier material (6) having thin-layer security elements (5) and a heat-sensitive substrate material (2), to the one surface of which adhere the thin-layer security elements (5), **characterized in that** the web-shaped carrier material (6) is separable from the thin-layer security elements (5).

8. The intermediate product according to claim 7, wherein the substrate material (2) has a hot-melt adhesive layer (4) on the side facing away from the thin-layer security elements (5).

9. The intermediate product according to claim 7 or 8, wherein the thin-layer security elements (5) are selected from the group of security elements as follows: magnetic stripes, security threads, optically variable layers, holograms, diffraction gratings, latent pictures, pearlescent pigment layers, layers with cross-linked liquid crystals, optical interference layers.

10. A method for continuously laminating foil webs for producing documents of value, wherein at least two foil webs are brought together and continuously bonded to each other, wherein at least one of the foil webs has a heat-sensitive substrate and a thin-layer security element disposed thereon and is unwound from a roll as an intermediate product according to any of claims 7 to 9, and a web-shaped carrier material, which at first is disposed on the security elements, is removed from the heat-sensitive substrate and the thin-layer security elements after unwinding the intermediate product and before bonding the foil webs.

## Revendications

1. Procédé pour appliquer des éléments de sécurité minces (5) sur des substrats (12) sensibles à la chaleur, comprenant les étapes suivantes :
- amenée des éléments de sécurité minces (5) sur un matériau support en forme de bande (6),
- amenée d'un matériau substrat (2) sensible à la chaleur,
- assemblage du matériau support (6) et du matériau substrat (2) par application de pression et de chaleur, de façon à ce que, d'une part, les éléments de sécurité minces (5) adhérent à une surface du matériau substrat (2), et à ce que, d'autre part, le matériau support (6) soit susceptible de se détacher des éléments de sécurité minces (5), et
- enroulement de l'ensemble matériau substrat (2) et matériau support (6) pour former un rouleau de produit semi-fini (11).

2. Procédé selon la revendication 1, comprenant les autres étapes suivantes :
- déroulement de l'ensemble matériau substrat (2) et matériau support (6) du rouleau de produit semi-fini (11),
- séparation du matériau support (6) du matériau substrat (2) de manière à laisser les éléments de sécurité minces (5) sur le matériau substrat (2), et
- découpe du matériau substrat en substrats (12) utilisables séparément.

3. Procédé selon la revendication 1 ou 2, où le matériau substrat (2) est pourvu d'une couche de colle thermofusible (4) sur sa face opposée à celle des éléments de sécurité minces (5).

4. Procédé selon la revendication 3, où le matériau substrat (2) est laminé avec d'autres couches avant ou après l'étape de découpe par application de pression et de chaleur.

5. Procédé selon l'une des revendications 1 à 4 pour la fabrication de documents de valeurs choisis dans le groupe de documents de valeur suivants : chéquiers, cartes de crédit, cartes d'identité, billets de banque, chèques, titres d'identité, titres de transport, billets d'entrée.

6. Procédé selon l'une des revendications 1 à 5, où les éléments de sécurité minces (5) sont choisis dans le groupe d'éléments de sécurité : pistes magnétiques, filigranes de sécurité, couches optiquement variables, hologrammes, réseaux de diffraction, images latentes, couches de pigments nacrés, couches de cristaux liquides réticulés, couches d'interférences optiques.

7. Produit semi-fini en tant que matériau en rouleau (11) pour la fabrication de documents de valeurs tels que chéquiers, cartes de crédit, cartes d'identité, billets de banque, chèques, titres d'identité, titres de transport et billets d'entrée, formé d'un matériau support en forme de bande (6) comprenant des éléments de sécurité minces (5) et un matériau substrat (2) sensible à la chaleur, sur une surface duquel adhèrent les éléments de sécurité minces (5), **caractérisé en ce que** le matériau support en forme de bande (6) est détachable des éléments de sécurité minces (5).

8. Produit semi-fini selon la revendication 7, où le matériau substrat (2) est pourvu d'une couche de colle thermofusible (4) sur sa face opposée aux éléments de sécurité minces (5).

9. Produit semi-fini selon la revendication 7 ou 8, où les éléments de sécurité minces (5) sont choisis dans le groupe d'éléments de sécurité : pistes magnétiques, filigranes de sécurité, couches optiquement variables, hologrammes, réseaux de diffraction, images latentes, couches de pigments nacrés, couches de cristaux liquides réticulés, couches d'interférences optiques.

10. Procédé de laminage sans fin de bandes pelliculaires pour la fabrication de documents de valeur, où au moins deux bandes pelliculaires sont assemblées et liées entre elles de manière continue, au moins une des bandes pelliculaires comportant un substrat sensible à la chaleur et un élément de sécurité mince disposé sur celui-ci, puis sont déroulées en tant que produit intermédiaire d'un rouleau, selon l'une des revendications 7 à 9, procédé dans lequel un matériau support en forme de bande, préalablement disposé sur les éléments de sécurité, est, après déroulement du produit semi-fini et avant liaison des bandes pelliculaires, retiré du substrat sensible à la chaleur et des éléments de sécurité minces.
